Europäisches Patentamt

European Patent Office

Office européen des brevets

(11) Veröffentlichungsnummer: **0 503 344 A1**

## (12) EUROPÄISCHE PATENTANMELDUNG

(21) Anmeldenummer: **92103080.5**

(22) Anmeldetag: **24.02.92**

(51) Int. Cl.⁵: **E05F 15/14**

(30) Priorität: **08.03.91 DE 4107497**

(43) Veröffentlichungstag der Anmeldung:
**16.09.92 Patentblatt 92/38**

(84) Benannte Vertragsstaaten:
**AT BE CH DE DK FR GB IT LI NL SE**

(71) Anmelder: **SIEMENS AKTIENGESELLSCHAFT**
**Wittelsbacherplatz 2**
**W-8000 München 2(DE)**

(72) Erfinder: **Rowedda, Volker, Dipl.-Ing.**
**Leipziger Strasse 9**
**W-3017 Pattensen(DE)**

(54) **Elektronische Automatik-Türsteuerung.**

(57) Elektronische Automatik-Türsteuerung, die einen Antriebs-Elektromotor derart ansteuert, daß dieser die Türblätter oder -flügel in einem Beschleunigungsvorgang (1,5,10,14) auf eine vorgegebene Geschwindigkeit beschleunigt und nach Durchlaufen einer Strecke (2,6,11,15) mit konstanter Geschwindigkeit in einem Bremsvorgang (3,7,12,16), an den sich eine Schleichfahrt (4,8,13,17) anschließt, auf Schleichfahrtgeschwindigkeit abbremst und bei Erreichen einer Endstellung stoppt, wobei die Einleitung der einzelnen Vorgänge von, in der Steuerung, insbesondere aus gespeicherten Werten, erzeugten oder direkt übernommenen, Schaltpunkten (A,D,E,F) bewirkt wird, die zeitabhängig im Zusammenwirken mit, vorzugsweise nur einem, Schaltelement entstehen.

FIG 1

EP 0 503 344 A1

Die Erfindung betrifft eine elektronische Automatik-Türsteuerung, die einen Antriebs-Elektromotor derart ansteuert, daß dieser die Türblätter oder -flügel in einem Beschleunigungsvorgang auf eine vorgegebene Geschwindigkeit beschleunigt und nach Durchlaufen einer Strecke mit konstanter Geschwindigkeit in einem Bremsvorgang, an den sich eine Schleichfahrt anschließt, auf Schleichfahrtgeschwindigkeit abbremst und bei Erreichen einer Endstellung stoppt.

Elektronische Automatik-Türsteuerungen sind in vielfältiger Ausgestaltung bekannt, so z.B. aus der CH-608 558. Bei dieser bekannten Automatik-Türsteuerung werden die Änderungen der einzelnen Bewegungsphasen der Türteile durch Schaltvorgänge ausgelöst. Dies beispielsweise über Magnetschalter, die an vorbestimmten Stellen des Türweges entlang der Fahrschiene der Türflügel in beliebiger, den Anforderungen angepaßten, Abständen angeordnet sind. Eine derartige Türsteuerung, die eine sichere Funktion erlaubt, ist bezüglich ihrer Komponenten aufwendig und die Montage und Einstellzeit ist lang.

Es ist Aufgabe der Erfindung, eine elektronische Automatik-Türsteuerung anzugeben, die kostengünstiger herstellbar ist und insbesondere einen geringeren Installations- und Montageaufwand erfordert. Dabei soll die Funktionssicherheit nicht beeinträchtigt, sondern sogar noch erhöht werden.

Die Aufgabe wird dadurch gelöst, daß die Einleitung der einzelnen Bewegungsvorgänge der Tür von, in der Steuerung, insbesondere aus gespeicherten Werten, erzeugten oder direkt übernommenen, Schaltpunkten bewirkt wird, die zeitabhängig im Zusammenwirken mit, vorzugsweise nur einem, Schaltelement entstehen.

Durch diese Ausgestaltung kann vorteilhaft die Zahl der notwendigen Schalter für die Einleitung der einzelnen Bewegungsphasen der Türteile wesentlich reduziert werden, ohne daß eine aufwendige Logikschaltung erforderlich wird. Die für die einzelnen Bewegungsvorgänge notwendigen Schaltungen werden durch virtuell in der Steuerung gebildete Schaltpunkte bewirkt, die von wenigen, im Idealfall nur einem, Schaltelement zeitabhängig angesteuert werden. Im Zusammenhang mit der, bereits bekannten, Schleichfahrtphase, entsteht dabei eine Steuerung, die sogar betriebssicherer arbeiten kann als die bekannten, mit mehreren Schaltelementen je Türbewegung arbeitenden Steuerungen, da eine Zentraleinheit einfacher ständigen Selbsttests unterworfen werden kann.

In Ausgestaltung der Erfindung ist vorgesehen, daß die Bildung der zeitabhängigen, intern erzeugten, Schaltpunkte durch ein Zusammenwirken von, an Türteilen erzeugten, Schaltimpulsen mit Impulsen von einstellbaren Zeitgliedern erfolgt. Die Zeitglieder bilden dabei gewissermaßen zusammen mit eingegebenen Beschleunigungs- und Geschwindigkeitswerten die von den Türblättern oder -flügeln zurückgelegten Strecken nach. Zeitglieder sind einfache, hard- oder softwaremäßig realisierbare Bestandteile einer elektronischen Steuerung und arbeiten sehr zuverlässig. So ergibt sich in Verbindung mit Testroutinen eine Betriebssicherheit, die die Betriebssicherheit einer schalterbetätigten Tür übertrifft und die gleichzeitig kostengünstig ist.

Eine sehr kostengünstige Ausführung ergibt sich, wenn für die Einleitung der Schaltvorgänge für die Öffnungs- und Schließbewegung ein- und derselbe Schalter verwendet wird. Die Verwendung nur eines Schalters, insbesondere eines kostengünstigen und zuverlässig arbeitenden, induktiven Näherungsschalters, erlaubt eine kostenoptimale Ausbildung der erfindungsgemäßen Steuerung. Besonders günstig ist dabei, wenn der verwendete Schalter am Gehäuse oder Gehäuseverlängerungen der elektronischen Automatik-Türsteuerung angeordnet ist. So entfällt jeglicher Schalter-Montageaufwand auf der Baustelle, lediglich eine Einstellung der Zeitglieder, die schnell und einfach möglich ist, muß erfolgen.

Der einzige Schalter für die Öffnungs- und Schließbewegung wird vorteilhaft im Bereich oder am Ende des Bereichs der konstanten Fahrgeschwindigkeit der Türteile angeordnet, das Gehäuse der Steuerung ist also entsprechend zu plazieren. Es ist aber auch ohne weiteres eine Anordnung in anderen Positionen möglich. Die Anordnung am Ende des Bereichs der konstanten Fahrgeschwindigkeit erlaubt dabei vorteilhaft eine besonders einfache Steuerungsausbildung.

Vorteilhaft ist auch eine symmetrische Lage in Bezug auf die Türbewegung, da sich so unterschiedliche Reibungsverhältnisse etc. am geringsten auswirken. Unterschiedliche Reibungsverhältnisse etc. machen sich bei der erfindungsgemäßen Steuerung im wesentlichen in Unterschieden in der Länge der Schleichfahrtstrecke bemerkbar. Dies ist jedoch für den praktischen Betrieb ohne Bedeutung. Die sich einstellende Länge der Schleichfahrtstrecke kann sogar dazu benutzt werden, eine automatische Nachjustierung der Zeitglieder vorzunehmen und so vorteilhaft einfach auf unterschiedliche Reibungsverhältnisse etc. zu reagieren. Dies empfiehlt sich insbesondere, wenn die Schleichfahrtstrecke sehr klein gewählt wird.

Die für die elektronische Türsteuerung vorgesehene Einrichtung weist zumindest einen Schalter an einem Türteil, insbesondere einem induktiven Näherungsschalter, und damit zusammenwirkende einstellbare Zeitglieder auf. Die bisherigen elektronischen Lösungen arbeiteten entweder mit einer Mehrzahl von Schaltelementen oder mit Wegaufnehmern, die diese Schaltelemente nachbilden. Demgegenüber wird mit Zeitgliedern ein prinzipiell abweichender Weg beschritten und eine erhebliche Vereinfachung erreicht. Darüber hinaus wird die Einstellung einfacher und schneller.

Besonders vorteilhaft ist die Verwendung eines gemeinsamen Schalters sowohl für die Öffnungs- als auch die Schließbewegung der einzelnen Türteile an einem Gehäuseteil oder einer Gehäuseteilverlängerung der elektronischen Steuerung. So können alle Steuerungsbauteile werkstattseitig montiert werden. Eine Baustellenmontage elektronischer Komponenten entfällt völlig.

Weitere Vorteile und Einzelheiten ergeben sich aus der nachfolgenden Beschreibung eines Ausführungsbeispiels, anhand der Zeichnung und in Verbindung mit den Unteransprüchen. Im einzelnen zeigen:

FIG 1    den Geschwindigkeitsverlauf von erfindungsgemäß gesteuerten Türblättern oder -flügeln über den Weg und

FIG 2    den Geschwindigkeitsverlauf von erfindungsgemäß gesteuerten Türblättern oder -flügeln über die Zeit.

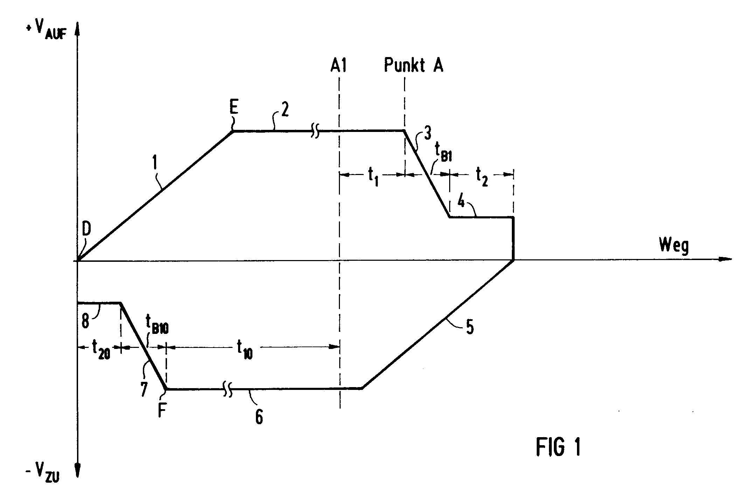

Wie in FIG 1 schematisch dargestellt, beginnt ein Öffnungs- und Schließvorgang im Punkt D. Die Geschwindigkeit wird dann entsprechend des Verlaufsteils 1 bis zum Punkt E erhöht und geht nach Erreichen der Sollgeschwindigkeit in den Verlaufsteil 2 mit konstanter Fahrgeschwindigkeit über. Das Schaltelement, z.B. ein induktiver Näherungsschalter, ist z.ß. in der Position A1 angeordnet und läßt nach Passieren dieser Position die Zeit $T_1$ ablaufen. Nach Ablauf der Zeit $T_1$ ist der Punkt A erreicht, von hier ab erfolgt eine Abbremsung während der Zeit $T_{B1}$ entsprechend dem Verlaufsteil 3. Eine Anordnung des Schalters in Punkt A erlaubt eine besonders einfache Steuerungsausbildung. Nach Ablauf der Zeit $T_{B1}$ wird auf Schleichfahrt umgeschaltet, die entsprechend dem Verlaufsteil 4 während $t_2$ zur Öffnungsstellung führt.

In analoger Weise wird auch bei der Schließbewegung verfahren, bei der zunächst entsprechend dem Verlaufsteil 5 beschleunigt wird, bis das Niveau der konstanten Geschwindigkeit entsprechend dem Verlaufsteil 6 erreicht ist. Mit dieser Geschwindigkeit passiert das Türteil die Position $A_1$, worauf die Zeit $T_{10}$ anläuft. Nach Ablauf der Zeit $T_{10}$ ist entsprechend dem Verlaufsteil 6 der Punkt F erreicht, hier beginnt die Bremsung entsprechend dem Verlaufsteil 7 über die Bremszeit $T_{B10}$; diese geht dann entsprechend dem Verlaufsteil 8 in die Schleichfahrt, deren Dauer $T_{20}$ entspricht, über.

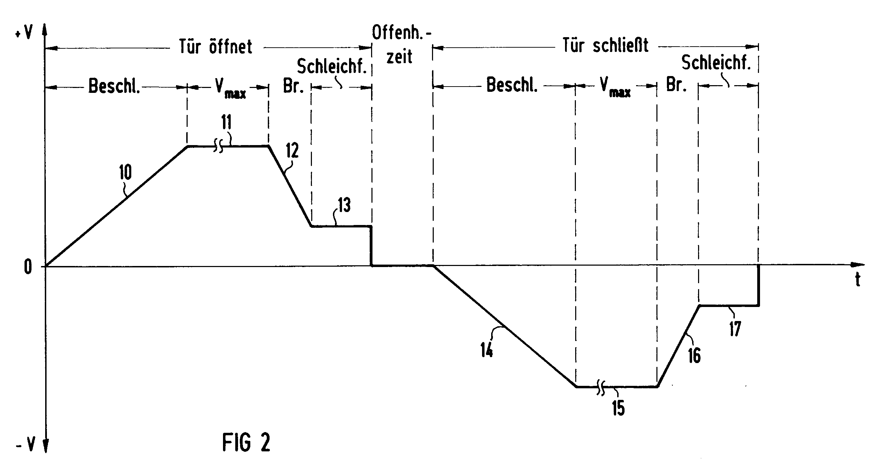

In FIG 2, die den schematisch dargestellten Zeitverlauf einer Türbewegung zeigt, wird über den Zeitabschnitt 10 beschleunigt, der dann in den Abschnitt 11 mit konstanter Geschwindigkeit übergeht. An den Abschnitt 11 schließt sich der Bremsabschnitt 12 an, auf den die Schleichfahrtzeit 13 folgt.

Nach einer Offenhaltezeit unbestimmter Länge beginnt der Rücklauf mit dem Beschleunigungszeitabschnitt 14, der in den Konstantgeschwindigkeitsabschnitt 15 übergeht. Auf 15 folgt der Abbremsungszeitabschnitt 16 und der Übergang in den Schleichfahrtzeitabschnitt 17, an den sich die Zeit der Geschlossenstellung in ebenfalls unbestimmter Länge anschließt.

Wie ersichtlich, sind nicht nur die Einzelverläufe der Bremsung und Schleichfahrt von einem während der Abschnitte 14 und 15 oder im Punkt A betätigten Schalter zeitsteuerbar, sondern auch der Gesamtverlauf.

Ebenso wie in Abwandlung der Erfindung der Gesamtverlauf steuerbar ist, hierzu würde z.B. vorteilhaft ein Schaltelement in der Schließstellung verwendet, daß zudem noch virtuell nachgebildet sein kann und nicht real vorhanden sein braucht, können auch einzelne Teile der Fahrkurve, z.B. nicht zeit-, sondern stromgesteuert erhalten werden. Desgleichen kann auch die Schleichfahrt entfallen, wenn nach Beendigung der Bremsphase ein Puffer zum Toleranzausgleich vorgesehen wird.

## Patentansprüche

1.  Elektronische Automatik-Türsteuerung, die einen Antriebs-Elektromotor derart ansteuert, daß dieser die Türblätter oder -flügel in einem Beschleunigungsvorgang auf eine vorgegebene Geschwindigkeit beschleunigt und nach Durchlaufen einer Strecke mit konstanter Geschwindigkeit in einem Bremsvorgang, an den sich eine Schleichfahrt anschließt, auf Schleichfahrtgeschwindigkeit abbremst und bei Erreichen einer Endstellung stoppt, **dadurch gekennzeichnet,**
    daß die Einleitung der einzelnen Vorgänge von, in der Steuerung, insbesondere aus gespeicherten Werten, erzeugten oder direkt übernommenen, Schaltpunkten bewirkt wird, die zeitabhängig im Zusammenwirken mit, vorzugsweise nur einem, Schaltelement entstehen.

2.  Automatik-Türsteuerung nach Anspruch 1, **dadurch gekennzeichnet,**
    daß die intern erzeugten Schaltpunkte virtuell durch ein Zusammenwirken von, an Türteilen erzeugten Schaltimpulsen mit Impulsen von einstellbaren Zeitgliedern gebildet werden.

3.  Automatik-Türsteuerung nach Anspruch 1 oder 2, **dadurch gekennzeichnet,**
    daß die Zeitglieder in der Türsteuerung zusammen mit eingegebenen Beschleunigungs- und Geschwindigkeitswerten, die von den Türblättern oder -flügeln zurückgelegten Strecken nachbilden.

4. Automatik-Türsteuerung nach Anspruch 1,2 oder 3,
**dadurch gekennzeichnet,**
daß für die Einleitung der Schaltvorgänge für die Türblätter oder -flügel ein- und derselbe Schalter verwendet wird.

5. Automatik-Türsteuerung nach Anspruch 1,2,3 oder 4,
**dadurch gekennzeichnet,**
daß für die Einleitung der Schaltvorgänge für die Türblätter oder -flügel ein Schalter verwendet wird, der am Ende der Strecke mit konstanter Geschwindigkeit positioniert ist.

6. Automatik-Türsteuerung nach Anspruch 1,2,3,4 oder 5,
**dadurch gekennzeichnet,**
daß die Einstellung der einzelnen Zeiten periodisch oder bei Anforderung manuell korrigiert wird.

7. Automatik-Türsteuerung nach Anspruch 1,2,3,4,5 oder 6,
**dadurch gekennzeichnet,**
daß die Einstellung der einzelnen Zeiten automatisch, insbesondere aufgrund der Länge der Schleichfahrzeit, korrigiert wird.

8. Elektronische Einrichtung zur Durchführung der Automatik-Türsteuerung nach einem oder mehreren der vorhergehenden Ansprüche, **dadurch gekennzeichnet,**
daß sie zumindest einen Schalter an einem Türteil, insbesondere einen induktiven Näherungsschalter, und damit zusammenwirkende einstellbare Zeitglieder aufweist.

9. Einrichtung nach Anspruch 8,
**dadurch gekennzeichnet,**
daß sie einen gemeinsamen Schalter für die Öffnungs- und Schließbewegung der einzelnen Türteile aufweist.

10. Einrichtung nach Anspruch 8 oder 9,
**dadurch gekennzeichnet,**
daß der gemeinsame Schalter derart an den Türteilen angeordnet ist, daß er im Bereich oder am Ende der Bewegung mit konstanter Geschwindigkeit liegt.

11. Einrichtung nach einem oder mehreren der vorhergehenden Ansprüche, **dadurch gekennzeichnet,**
daß die verwendeten Schaltelemente zentral, insbesondere an einem Gehäuseteil oder einer Gehäuseteilverlängerung der elektronischen Steuerung, angeordnet sind.

12. Automatik-Türsteuerung mit vorgegebenen Beschleunigungen und Geschwindigkeiten für die einzelnen Teile der Tür,
**dadurch gekennzeichnet,**
daß die Einleitung und/oder Beendigung von einzelnen Bewegungsvorgängen der Türteile von, zumindest einem, Schalter eingeleitet, zeitabhängig erfolgt.

FIG 1

EP 0 503 344 A1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 186 393 (YOSHIDAKOGYO K.K.) <br> * das ganze Dokument * <br> --- | 1-10,12 | E05F15/14 |
| X | EP-A-0 162 280 (DAIHATSU DIESEL MFG. CO. LTD.) <br> * Seite 18, Zeile 24 - Seite 34, Zeile 32; Abbildungen 2,8-10 * <br> --- | 1-10,12 | |
| X | GB-A-2 1D3 710 (HOKUYO AUTOMATIC CO. LTD.) <br><br> * Seite 3, Zeile 6 - Seite 4, Zeile 103; Abbildungen 3-7 * <br> --- | 1,3,4,6, 7,9,12 | |
| X | FR-A-2 442 327 (M. TABOUR) <br><br> * Seite 4, Zeile 10 - Seite 6, Zeile 15; Abbildungen * <br><br> ----- | 1,3,4,6, 12 | |

| RECHERCHIERTE SACHGEBIETE (Int. Cl.5) |
|---|
| E05F |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | DELZOR F. |